# EUROPEAN PATENT APPLICATION

(11) **EP 1 555 798 A2**
(43) Date of publication of application: **20.07.2005**
(21) Application number: 04030787.8
(22) Date of filing: 24.12.2004
(51) Int. Cl.: H04M 3/51

(54) **Contact center with SIP Microsoft RTC Messenger type clients for callers and/or agents**

(30) Priority: 26.12.2003 US 532522 P; 22.12.2004 US 020812
(71) Applicant: ALCATEL, 75008 Paris (FR)
(72) Inventor: Wengrovitz, Michael, Concord Massachusetts 01742 (US)
(74) Representative: Schäfer, Wolfgang, Dipl.-Ing.

(57) **Abstract**

Method and system of resource provisioning between a call center having a real-time communication (RTC) server that processes user instant text messages and voice transmissions. The RTC server determines a suitable routing destination for the voice call based on analysis of one or more instant text message exchanges. In some cases, the RTC server may supply documents, instant messages containing HTML links and multimedia audio and video in order to seek to satisfy the caller without routing the voice call to a human agent. The RTC server also provides Session-on-Hold, IM Help, Multichannel Interaction, and Call Center Buddy capabilities.

## Description

### FIELD OF THE INVENTION

The present invention relates to methods and systems of resource provisioning between a call center and one or more users via a real-time communication call center server adapted to route user communications by processing user communication content.

### BACKGROUND

Call centers provide vital communication links between consumers and businesses. In present call center systems, a consumer places a telephone call via the standard public telephone network to the main toll-free number of the call center, and then interacts with an interactive voice response (IVR) system that acts to deduce the caller's intent. Typically, after a waiting period, the caller is transferred to an appropriate call center agent who then talks with the consumer and addresses his or her requests. In those implementations based on Dual Tone Multi-Frequency (DTMF), a caller may have to progress through a chained series of different DTMF menus in order to eventually specify his intent. Callers readily become frustrated with this slow and cumbersome process, only to discover that in their case, as in many cases, there is actually no DTMF menu item that correctly matches their intent. In some cases, the caller may opt-out by depressing the "O" key to speak with a call center human operator in order to more quickly and accurately specify his or her intent thereby causing the call center operator to spend time on these calls incurring additional call center expense. In other cases, the caller may become frustrated, discontinue the call, and not purchase additional products from this company because of the poor level of customer service and support.

Typically, a caller may be presented with music-on-hold (MOH) while waiting for a human call center agent to become available. In some cases, audio material, other than, or in addition to, MOH might also be presented. For example, a call to an airline reservation center might provide the caller with a pre-recorded audio announcement describing special sales flights to various destinations, or weekend travel specials. Also, if the user enters his frequent flyer code via DMTF in response to a prompt from an IVR, the call center might deliver audio-on-hold (AOH) information that summarizes the caller's frequent flyer mileage total. In addition, callers may receive audio information describing availability of call center agents and the expecting waiting time in the call queue where an example of a typical audio announcement is: "Please wait. Your call will be answered approximately five minutes."

As telephony networks evolve from conventional circuit-switched public telephone networks to packet-switched voice and data IP-based networks, new forms of communications based on voice/data convergence will emerge. There is need for the next generation of call centers to support these new forms of communication and the new call centers should provide improved customer service by exploiting this voice/data convergence.

One of the most promising voice/data convergence protocols is Session Initiation Protocol (SIP). SIP is optimized for efficiently establishing the setup, modification, and teardown of general media exchange sessions between users on an IP network. Details of the SIP protocol are called out in The Internet Engineering Task Force (IETF) Request for Comments (RFC) number 3261.

Various types of SIP clients have emerged in the marketplace. Presently, the most widely-deployed SIP client is the MICROSOFT WINDOWS(TM) Real-Time Communications (RTC) Messenger, built into the MICROSOFT WINDOWS XP(TM) operating system, available from the Microsoft Corporation of Redding, Washington. MICROSOFT WINDOWS(TM) RTC Messenger is presently downloadable to and installable on existing Microsoft Corporation legacy WINDOWS(TM) systems including WINDOWS 95(TM), WINDOWS 98(TM), WINDOWS NT(TM), and WINDOWS 2000(TM). MICROSOFT WINDOWS(TM) RTC Messenger includes integrated capabilities for sending instant messages (IMs), text chatting, viewing and changing presence status, creating buddy lists, setting up and terminating Voice-over-IP (VoIP) calls, transmitting and receiving video-over-IP, exchanging documents, and screen sharing. SIP-based communication clients integrated with real-time communication servers are referred to throughout as RTC Messengers. In addition, SIP-based communication clients are used in peer-to-peer applications between persons referred to as "buddies."

### SUMMARY

The present invention in its several embodiments includes methods and systems of resource provisioning between a call center and users, or callers in the examples below, with each of the users having a user interface for processing communications including instant text messages and voice transmissions over the Internet for example. Generally, the method has the user transmitting via the user's interface, a first communication to the call center, where the call center includes a real-time communication call center server for processing a plurality of user instant text messages and for processing a plurality of user voice transmissions. The real-time communication call center server of the present invention: determines a user destination address for each received initial user communication; transmits to each determined user address an interrogative communication and if a reply user communication to the interrogative communication is received, the RTC server uses the user communications to determine and send the amount and kind of content communications to be sent to the user, and transmits to the user the determined amount and kind of content communications. In addition, the call center may have one or more call center agents, i.e., humans on call to respond to the users via the RTC call center server of the present invention. The RTC call center server may analyze the content of communications by a user, and based on such information as the user's purpose for the initial communication with the resource center, the RTC call center server may establish a routing state. The routing state may include the best call center agent to which a voice communication may be directed.

SIP-based communication clients are presently deployed widely, particularly WINDOWS(TM) -based operating systems. These PC-based clients support integrated communication capabilities for presence, instant messaging, text chat, voice-over-IP, video-over-IP, file transfer, and screen sharing. Although such clients have been typically used to communicate in a peer-to-peer fashion between people via the Internet, or between enterprise workers on a corporate LAN, the present invention in its several embodiments permits the use of these clients to communicate with call centers.

In the several embodiments of the present invention, delivery of new call center services is provided via the Real Time Communications Call Center Server (RTC-CCS). One such service provided by RTC-CCS is Interactive Session Response (ISR). ISR exploits the fact that the caller has integrated voice and instant message (IM) capabilities, and accurately routes the voice call based on the caller's intent as textually specified within an instant message. Another exemplary service is IM Help (IMH), whereby a caller initially calls the call center with voice and receives one or more instant messages with text, web links, or documents from RTC-CCS prior to possible escalation to a human call center agent. Other services provided by RTC-CCS include Multi-Channel Interaction (MCI), Session-on-Hold (SOH), and Call Center Buddy (CCB). CCB allows a consumer to add a call center to his buddy list, and subsequently exploits the built-in presence capabilities of RTC Messenger to convey call center status, and/or other information of deduced interest to the consumer.

RTC-CCS provides important services to callers without necessarily making additional changes to the call center. However, if the call center agents also have RTC Messenger in addition to, or instead of, conventional PBX telephones, RTC-CCS provides additional services including document exchange, video-over-IP, screen sharing, instant messaging between the caller and call center agent. An alternative embodiment has a RTC-CCS Desktop Toolkit that facilitates development of integrated call center agent applications.

ISR has several advantages with one being that it allows the caller to directly specify the intent of his call via simple free-form text entry, rather than via a complex series of DTMF menus. Using ISR, the caller may easily, quickly, and precisely declare his intent, thereby eliminating costly human operator intervention. Furthermore the overall customer satisfaction level is increased - the customer is better able to specify his intent, thereby leading to improved accuracy in the routing of the call. With ISR, the customer is able to speak with the call center agent that best satisfies his needs.

### BRIEF DESCRIPTION OF THE DRAWINGS

The present invention is illustrated by way of example and not limitation in the figures of the accompanying drawings, and in which:
FIG. 1 illustrates an exemplary general network topology of the present invention;
FIG. 2 illustrates exemplary signal events of an embodiment of the present invention;
FIG. 3A illustrates exemplary signal events of an Interactive Session Response embodiment of the present invention;
FIG. 3B illustrates exemplary signal events of an alternative Interactive Session Response embodiment of the present invention;
FIG. 3C illustrates exemplary signal events of an alternative Interactive Session Response embodiment of the present invention;
FIG. 4A illustrates exemplary signal events of an IM Help embodiment of the present invention;
FIG. 4B illustrates exemplary signal events of an alternative IM Help embodiment of the present invention;
FIG. 5 illustrates exemplary signal events of an Multi-Channel Interaction embodiment of the present invention;
FIG. 6 illustrates exemplary signal events of an alternative Multi-Channel Interaction embodiment of the present invention;
FIG. 7A illustrates exemplary signal events of a Session-on-Hold embodiment of the present invention;
FIG. 7B illustrates exemplary signal events of an alternative embodiment of a Session-on-Hold embodiment of the present invention;
FIG. 8A illustrates an exemplary graphic user interface window for launching a VoIP conversation with a call center of the present invention;
FIG. 8B illustrates an exemplary graphic user interface window for launching a VoIP conversation with a call center of the present invention;
FIG. 8C illustrates an exemplary graphic user interface window for call center buddies and presence of the present invention;
FIG. 8D illustrates an exemplary graphic user interface window for call center buddies and presence of the present invention;
FIG. 9 illustrates exemplary signal events of an embodiment with callers and agents having integrated clients of the present invention;
FIG. 10 illustrates, in further detail, exemplary signal events of an embodiment with callers and agents having integrated clients of the present invention; and
FIG. 11 illustrates exemplary signal events of an embodiment with callers and agents having integrated clients, and the agent having CRM processing, of the present invention.

### DETAILED DESCRIPTION

Modern call centers typically support email exchanges with consumers and may also allow the call center agent and consumer to concurrently browse the world wide web. An improved call center may also use Computer Telephony Integration (CTI) technology coupled to its private branch exchange (PBX) system to intelligently, or at least more precisely, route each incoming call to what it deems at the time to be the best call center agent, and to automatically provide that agent with caller-specific information. The caller-specific information is retrieved from the call center's database and may also be screen-popped to the answering agent's graphical user interface. The ability of the call center agent to efficiently access and associate customer-specific database information, using Customer Relationship Management (CRM) software coupled to the voice call, is an integral aspect of providing good customer service.

When consumers use SIP-based communication clients such as RTC Messenger and other similar software clients that integrate multiple communication channels to interact with a call center, the callers are able to use integrated communication channels such as text, web, voice and video, in addition to their legacy telephones, during their interactions with a call center. The present invention, in its several embodiments, referred to as the Real-Time Communication Call Center Server(RTC-CCS) allows resource centers, and by example call centers, to deliver important new services to the consumers who use SIP-based communication clients such as RTC Messenger and other similar software clients. RTC-CCS exploits the prevalence, ubiquity, and built-in features of SIP-based communication clients such as RTC Messenger to deliver these new services. The present application describes call center architectures based on usage of RTC-CCS and the new call center services that it enables. These services include Interactive-Session-Response (ISR), IM Help (IMH), Multi-Channel Interaction (MCI), Session-on-Hold (SOH), and Call Center Buddies (CCB). In addition, since call center agents may also use PCs containing SIP-based communication clients such as RTC Messenger, the following discloses additional topologies and features of an RTC-enabled call center agent. Throughout the Real Time Communications Call Center Server may be embodied as one or more servers or computers enabled with one or more server applications according to the client/server model. The communication instructions of the RTC-CCS may be included in one or more communications modules comprising script-based or executable applications. Likewise, the routing instructions of the RTC-CCS may be included in one or more routing modules comprising script-based or executable applications.

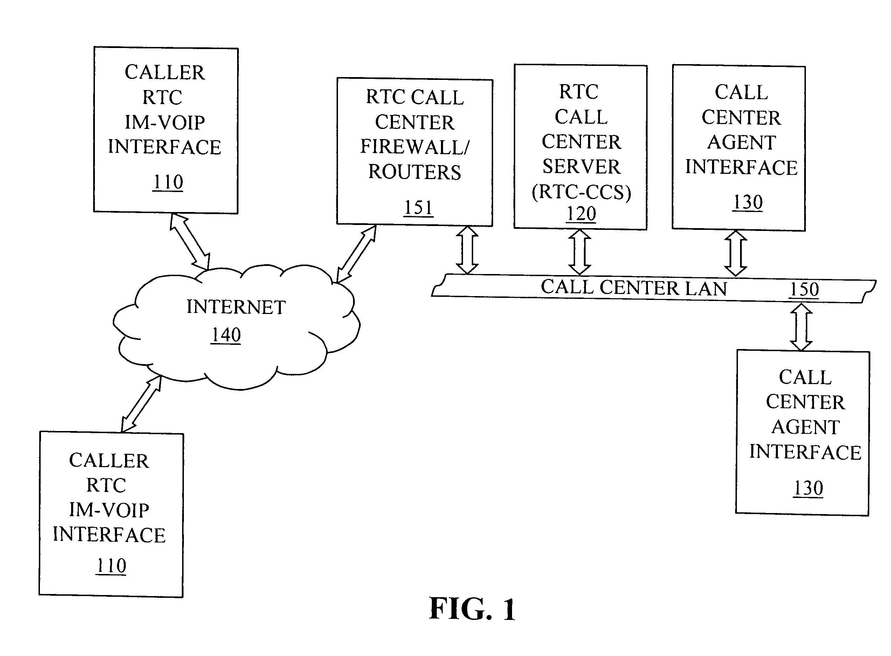

As shown in FIG. 1, RTC-CCS includes a CPU-based server 120 located at the boundary of the call center local area network (LAN) 150, where the boundary preferably has at least a router and preferably a firewall 151 that preferably includes a packet-filtering router connected to the Internet 140, a packet-filtering router connected to the call center LAN 150 and an application gateway interposed between the two routers. The call center LAN router/firewall 151 is transparent for purposes of disclosing the present invention in its several embodiments and those of ordinary skill in the art will recognize that it need not be further referenced. Users having SIP-based communication clients such as RTC Messenger and other similar software clients running on their personal computers (PCs)110, for example those using a modern WINDOWS(TM) operating system, are adapted to contact the call center using RTC-CCS via their caller RTC IM interface 110. The call center agent interface 130 may employ various types of appliances when interacting with users. These appliances include PBX telephones, PCs that execute CRM software, CTI applications, browsers, and SIP-based communication clients such as RTC Messenger and other similar software clients.

In one embodiment, RTC-CCS functions as a middleware server, providing a layer between the conventional call center and callers who use RTC Messenger, or a similar software client, that allows the call center to re-use existing PBX infrastructure in order to handle calls from RTC Messenger and similar software clients. In this embodiment, RTC-CCS provides the necessary translation and conversion that interfaces the caller's VoIP-based (i.e., SIP-based) communication client to an existing call center, which previously handled only voice calls from the Public Switched Telephone Network (PSTN).

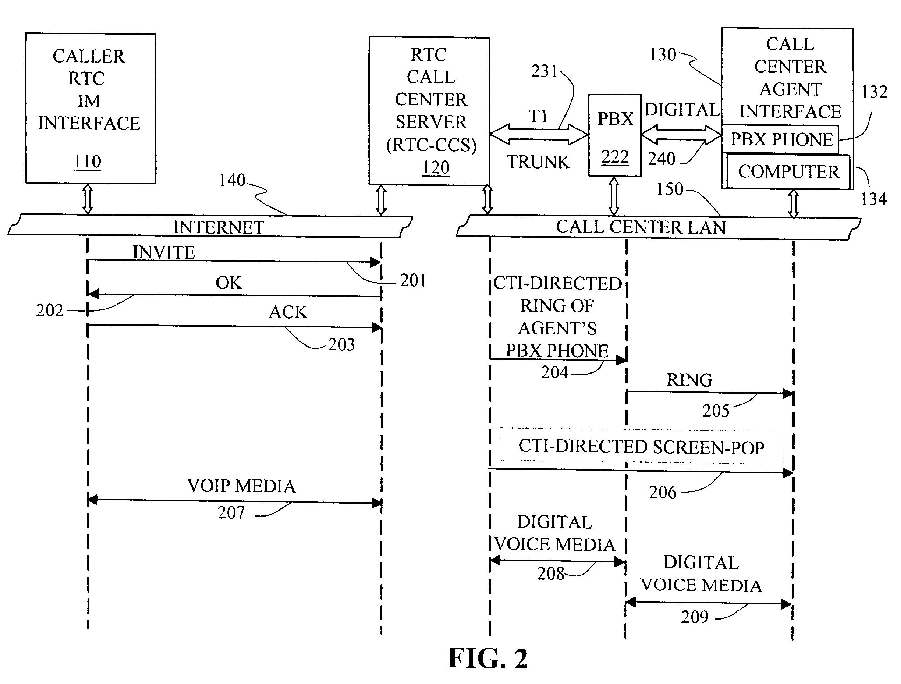

An example of how an RTC-CCS operates as middleware is depicted in FIG. 2, where the middleware functionality between a call center having conventional infrastructure (e.g., PBX 222, PBX phones 132, CTI clients, and call center LAN 150) and Internet users with SIP-based communication clients such as RTC Messenger is illustrated by example. The caller uses SIP-based communication client as an interface 110 to make a VoIP call request to the call center via the RTC-CCS 120 with the SIP INVITE message (step 201) via the Internet 140, RTC-CCS signals its acceptance of this request with a SIP OK signal (step 202). The RTC-CCS dials or places a phone call to a call center human agent interface in this example using PBX CTI (step 204), thereby causing the PBX 222 to ring the PBX phone 132 of the call center agent 130 (step 205). In this example, the RTC-CCS using CTI invokes a screen-pop at the display of the personal computer 134 of the call center agent (step 206). The RTC-CCS sends VoIP media to and receives VoIP media from the caller via the Internet or other network segments (step 207). The RTC-CCS converts the voice media from IP to a PBX digital format sends and receives to and from the PBX voice media (step 208) via telephony trunks 231. The PBX sends digital voice media to and receives digital voice media from the PBX phone 132 of the call center agent (step 209) via digital lines 240. The middleware use of the example embodiment allows callers to use a new type of client, e.g., RTC Messenger to access the call center's existing infrastructure. In this example embodiment, RTC-CCS is adapted to provide visual indicators such as screen-pops. Accessing and indexing of a customer database (not shown) may be done using the "From:" header in the SIP INVITE instead of the caller-ID number provided by the PSTN in conventional methods.

In the preferred embodiment, RTC-CCS includes a selectable CTI interface so that it interconnects with one or more types of CTI-capable PBXs. In a heterogeneous call center that has multiple PBXs from different vendors, a single RTC-CCS server may accordingly handle calls from both PSTN telephones and from SIP-based communication client messages and to suitably route these to agents on any of these PBXs.

With RTC-CCS serving as the middleware layer, the call center continues to offer the same set of services that it currently offers to callers who use either conventional telephone sets in a PSTN supported connection or RTC Messenger. However, an advantage of RTC-CCS is that it provide useful and new services, over and above the handling of simple voice calls. The new services offered by RTC-CCS leverage the combination of built-in integrated communication features of the caller's RTC Messenger client or similar client.

### Interactive Session Response

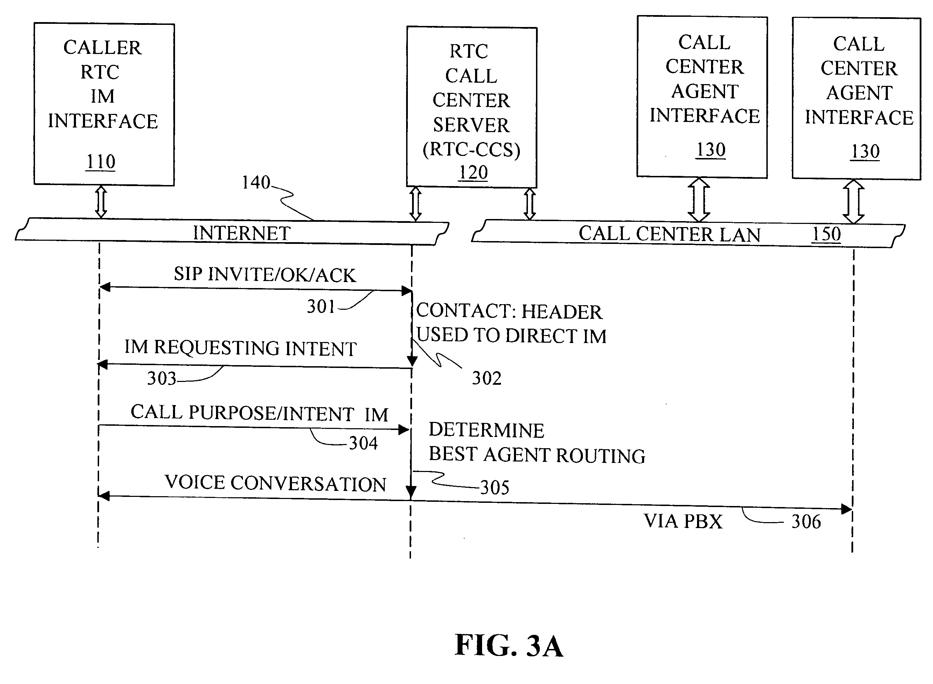

FIG. 3A depicts a service herein referred to as Interactive Session Response (ISR) that results from, and is part of, the RTC-CCS in its several embodiments. Using ISR, RTC-CCS exploits the integrated voice and instant message (IM) capabilities of the caller. ISR accurately routes calls based on the caller's textual description of his intent, i.e., the textual content of an instant message (IM) body, when he contacts the call center. ISR extends conventional methods of Interactive Voice Response (IVR) and associated DTMF interaction that indirectly seek to determine the caller's intent. With ISR, the caller directly specifies his intent within the content of the IM associated with the voice call.

In the preferred embodiment of ISR depicted in FIG. 3A, the caller initiates a voice call to the RTC-CCS-enabled call center in (step 301). RTC-CCS examines the initial voice call, particularly the "From:" and "Contact:" fields in the caller's SIP INVITE (step 302) header to determine the address to send the IM. RTC-CCS then answers the call by immediately sending an IM back to the caller in (step 303) an interrogative communication requesting that the caller describe the intent and purpose of his call. In the preferred embodiment, the caller responds to the RTC-CCS IM query with a free-form IM response (Step 304). RTC-CCS then determines a communication routing state by employing computer-based text analysis to understand and analyze this IM response in order to best deduce the caller's request. Based on the analysis of the textual response from the caller, RTC-CCS then routes the call to the best agent (step 305). For example, the ISR may then employ methods for skills-based routing and policy matching or other best -fit techniques to suitably route the call. Once routed, the call continues as a voice conversation (step 305). In some embodiments, voice media to and/or from the call center agent is via an existing PBX telephone set, in which case the RTC-CCS preferably performs VoIP conversion and employs CTI to interact with the PBX. In an alternate embodiment, media remains in VoIP format and may be sent by the RTC-CCS to the call center agent's RTC Messenger or similar client.

In alternative embodiments, RTC-CCS also employs other policy-based routing in addition to computerized text analysis of the caller's IM response, to suitably route the call. For example, if the caller sends back an IM such as "I'm having a problem with my clothes washer, Model 350. It leaks and I want to speak with the appliance company president about this," RTC-CCS would employ content analysis and existing policy matching to route the call to the customer support division responsible for the appliance company's Model No. 350 clothes washing machines. Even though RTC-CCS has deduced the intent of the caller to speak to the appliance company president about product support and repair for the specific type and model of appliance, the overriding policy prohibits direct routing of this to the president, and suitably routes the call instead to the customer support division.

RTC-CCS may, as an option, combine ISR with other advanced call routing processes, such as skills-based routing, to properly route the call. Referring to previous example, perhaps there are no currently available clothes washing machine Model No. 350 agents, but agents with skills in clothes washing machines of Model No. 220 and Model 460 are available. The routing process for example combines the information extracted from ISR and then determines whether the agent with Model No. 220 skills or Model No. 460 skills would be the most appropriate for handling this particular call.

In the preferred embodiment, voice media is exchanged between the caller's RTC Messenger, or similar software agent, and RTC-CCS using VoIP. RTC-CCS then dials the call center agent's telephone set and converts the media from VoIP to the digital or analog voice protocol used by the PBX. In another embodiment, the call center agent may also have a VoIP client, such as RTC Messenger, so, in this embodiment, no media conversion would be needed. Other aspects of call center operation where the call center agents also use VoIP SIP clients, such as RTC Messenger, are described below.

In some embodiments, ISR employs computerized text analysis techniques well known in the art in order to determine the intent of the voice caller. Although such text analysis techniques are well known in the art in applications that include email analysis for automated response and routing of emails to an agent, the present invention in its several embodiments provides a coupling between computerized text analysis and the intelligent routing of voice calls.

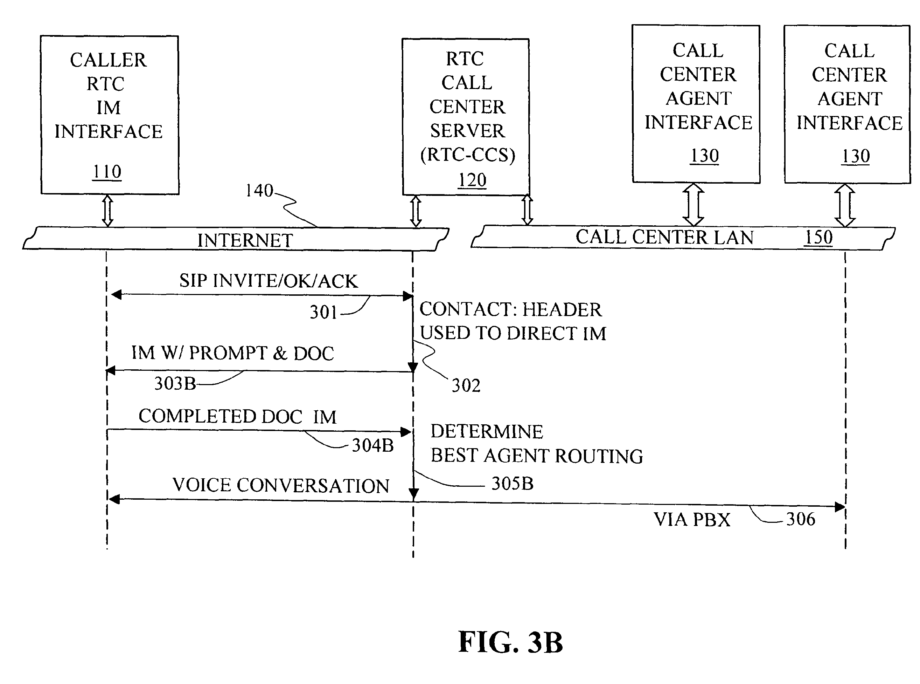

In the preferred embodiment of ISR, the caller specifies his intent within an instant message in response to a query from the RTC-CCS. In addition, there are also other embodiments whereby the caller conveys textual intent via non-IM-based methods. For example, as depicted in Figure 3B, the RTC-CCS requests that the user complete a text document therein specifying the intent of the call. The ISR routes each call to the best agent by analyzing the content of a completed document.

As an option, the document may be initially forwarded by the RTC-CCS to the caller, or alternately the document may reside on the user's interface device. The document may optionally include other information such as account code, customer information, registration number, warranty data, and the like. The document to be completed is preferably capable of being pushed to the caller using the built-in file exchange capabilities of RTC Messenger or similar software agent, or made available to the caller by other means such as a web download or pre-stored on the caller's interface device such as a personal computer. A typical example might be the exchange of a document that not only has textual information about the caller's intent but also includes additional customer registration information such as the customer's address, when and where the item of interest was purchased, and an indication of the interest the customer may have in purchasing additional products. The information in the document would therefore be used to both route the call and to update the call center's database for purposes of customer tracking, sales channel analysis, and the like. In the ISR embodiment depicted in FIG. 3B, RTC-CCS the IM contains a text prompt and document to be completed by the caller (step 303B) and then the caller completes and returns via IM the text document forwarded to him by RTC-CCS (step 304B). Thereafter, in determining a communication routing state, the RTC-CCS analyzes the submitted document and may use routing logic previously described to route the call to the best agent (step 305B)

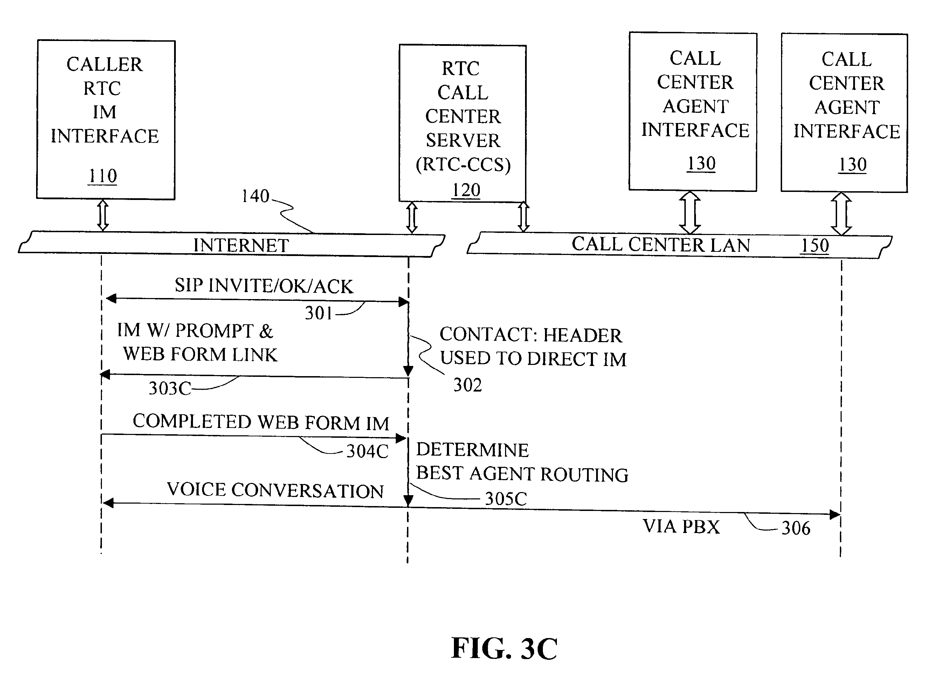

In another exemplary embodiment depicted in FIG. 3C, the response from the RTC-CCS, as an interrogative communication, includes a web link within the instant message (step 303C). The caller clicks on the link, which then opens a web-based form. The caller then fills out and submits the web-based form (step 304C), which is then used by RTC-CCS in determining a communication routing state to accurately route the call (step 305C). Thus, the call is routed to the best agent by analyzing the content of a completed web form. The web form may, as an option, also store cookies on the caller's interface device that may be retrieved as part of the call routing process.

### Caller Assist via IM-Help

In the embodiments depicted in Figures 3A-3C, RTC-CCS responds to the caller by issuing a single query to the caller to allow the caller to specify his intent, via an IM, document, or a web form, prior to the call being routed to a human call center agent. However, once RTC-CCS determines the caller's intent, in some cases the need to route the call to an actual human agent might not exist. In these embodiments, the RTC-CCS is be able to offer the needed help by sending one or more instant messages, forwarding one or more documents, or proposing one or more web links. This optional aspect of the RTC-CCS invention is herein referred to as IM-Help (IMH).

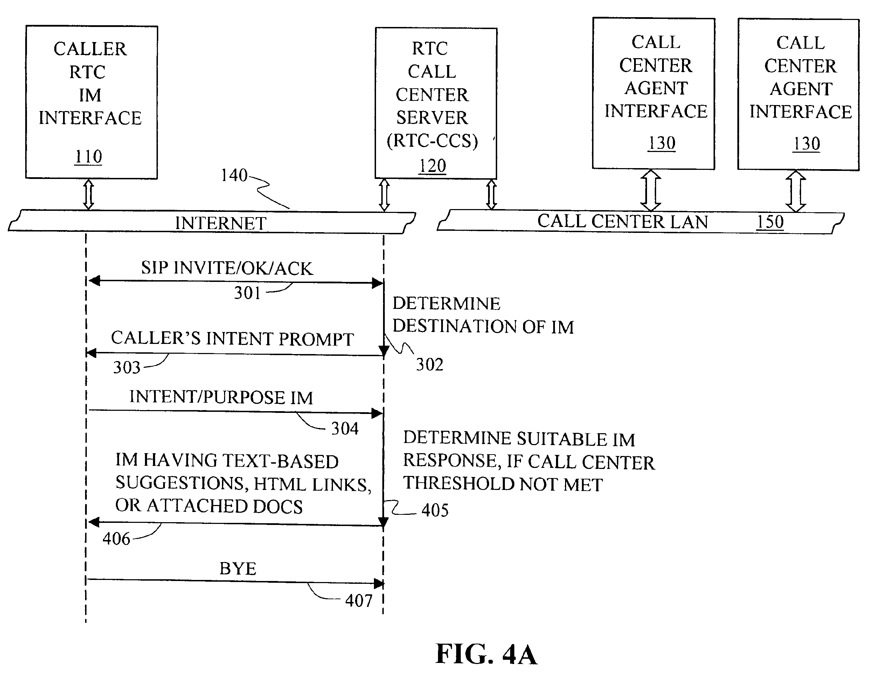

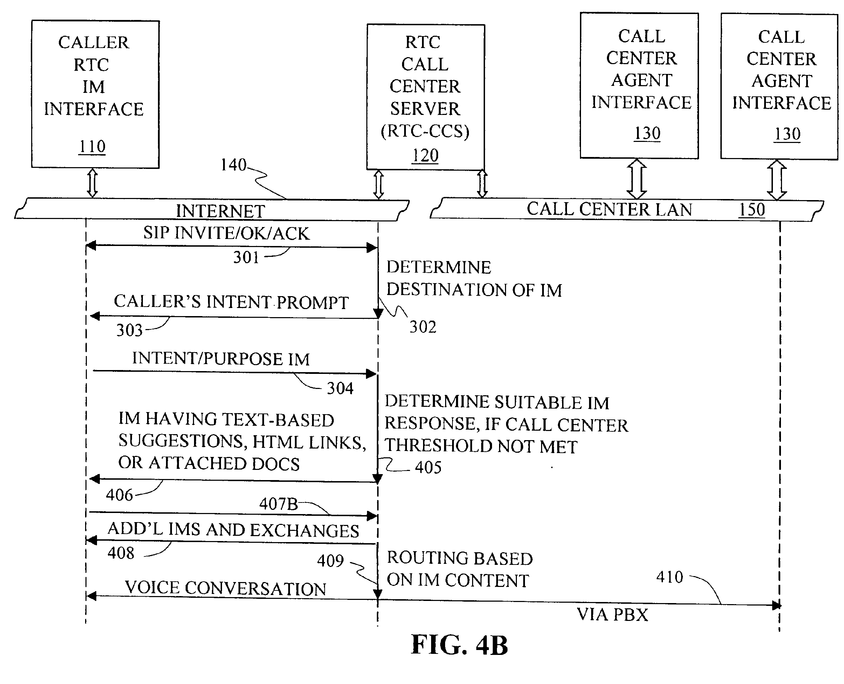

In order to minimize consumption of human call center resources while maintaining customer satisfaction, RTC-CCS first seeks to address the caller's needs via automatic means, without involving a human call center agent. An example of the process by which the RTC-CCS provides the IMH service is depicted in FIG. 4A. A caller contacts the call center (step 301) using an INVITE issued from his RTC Messenger for example. Preferably, the RTC-CCS uses the "Contact:" in the caller's SIP INVITE to determine the destination of the IM (step 302). RTC-CCS responds with an interrogative communication to the caller with an IM prompting or otherwise requesting the caller to specify the purpose of the call (step 303). This is done by IM in this example and may be done via voice as described below. The caller responds back with an IM specifying the purpose of his call (step 304). However in this example, RTC-CCS 120, in deriving a communication routing state, determines that the need for routing the voice call to a human call center agent does not yet exist (step 405). With the routing to a human call center threshold not met, the RTC-CCS 120 automatically offers assistance to the caller by sending one or more additional IMs, attached and forwarded documents, web or HTML links, or other text-based responses the RTC-CCS deems relevant (step 406). Any or all of these IMs in this step 406 may be provided in an attempt to satisfy the caller. In some cases, RTC-CCS supplies the needed information within a single automatic transaction that does not directly involve a human call center agent and the satisfied caller terminates the call, as depicted with the BYE transmission (step 407). In other circumstances as illustrated in FIG. 4B, additional exchanges between the caller and RTC-CCS may be necessary; exchanges as messages made from the user (step 407B) and to the user (step 408). In this example, the RTC-CCS 120 automatically engages in what may be perceived as text chat by and with the caller (step 408), and in this format, the RTC-CCS 120 is proposing and exchanging one or more documents or web links, in an effort to satisfy the caller's intent without directly involving interaction with a human call center agent For example, the initial IM might not fully address the caller's intent, and subsequent IM exchanges containing additional text messages, HTML links, and/or attached documents are exchanged prior to the voice call either being escalated to the best call center agent, or terminated. In some cases, these multiple exchanges are be sufficient, leading the satisfied caller to terminate the voice call. In other cases, the RTC-CCS 120 deduces, as part of the step of determining a communication routing state, preferably using a scoring system and a predetermined threshold, that a human call center agent is actually needed (step 409) and with this deduction, the RTC-CCS suitably routes the call (step 410) to the best human agent.

The usage of IM-based self-help employing instant messages, document exchange, and/or web browsing prior to possible voice call escalation within the same session provides the framework within which IM-Help, or IMH, services are provided by the RTC-CCS 120. Such services exploit the integrated instant messaging, document exchange and web access capabilities of the caller's RTC Messenger. IMH preserves the call center human agent resources while still satisfying the needs of the caller. If the RTC-CCS 120 deduces that the caller's needs remain unmet after one or more of the automatic exchanges within an IMH session, RTC-CCS then routes the voice call to the best or best matched human call center agent. The call routing process is preferably based on the initial specification of caller's intent in the message 304 or is based on the entire history of the exchange. Accordingly, the RTC-CCS 120 preferably exploits the usage of IM-based self-help employing instant messages, document exchange, and/or web browsing prior to possible voice call escalation within the same session to better allocate the resources of the exemplary call center while providing meaningful content to the caller according to discerned intent.

### Multi-Channel Interaction

In the previously disclosed embodiments, RTC-CCS 120 provided the voice services from the call center by routing the call to a human agent and the interaction between RTC-CCS 120 and the caller consisted of non-voice exchanges of instant messages, documents and web links. In additional embodiments, the RTC-CCS 120 itself speaks or is otherwise engaged in audible transmissions and listens to the caller within a session. In additional embodiments, RTC-CCS integrates voice with all of the ISR and IHM services previously described, so that the caller interacts with RTC-CCS 120 using both the voice and/or text channels preferably already built-in to his RTC Messenger client.

In a basic example, upon receipt of the voice call the RTC-CCS 120 verbally thanks the caller for calling, then sends the caller an instant message requesting more information about the purpose of the call, then verbally asks the caller to specify the purpose of the call, and then verbally thanks the caller after the caller's IM response. Use by the RTC-CCC 120 of multiple channels of text, document exchange, and voice is referred to herein as Multi-Channel Interaction (MCI).

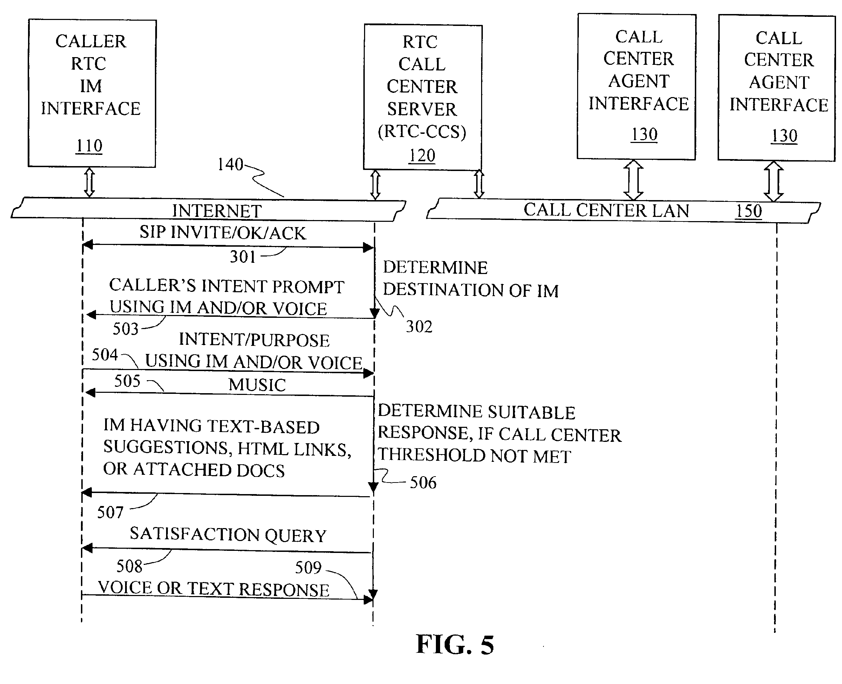

Fig. 5 depicts an example of how the MCI service of RTC-CCS 120 operates. Initially, the caller contacts the call center via an INVITE from his RTC Messenger (step 301). The RTC-CCS 120 uses the "Contact:" in the caller's SIP INVITE to determine the destination of the IM (step 302). Then the RTC-CCS 120 sends an interrogative communication as an instant message to the caller requesting more information regarding the purpose of the call (step 503). Simultaneously, RTC-CCS, as an option, may also speak to the caller and politely ask that the caller (step 503) provide the necessary information so that the call may be assessed for forwarding to the agent deemed most likely to be of service. Preferably, the user responds by sending an instant message and/or speaking to RTC-CCS, or both (step 504). The user may then receive music-on-hold in (step 505) during the step of determining of the communication routing state by RTC-CCS (step 506) that preferably includes analysis of the caller IM and/or voice determining the best content for the text, HMTL links or attached documents, while one or more subsequent instant messages, documents or web links are exchanged by RTC-CCS 120 in (step 507). RTC-CCS 120 may verbally query the caller (step 508) to determine if this material was satisfactory, and may also listen to the caller's verbal response (step 509). In this way, the combination of multiple media channels is used to enhance the caller's experience and to deliver a more satisfying interaction between the caller and the call center, without necessarily involving human call center agents.

As disclosed above, the initial contact between the caller and RTC-CCS 120 may be a voice call preferably using VoIP. However, in another aspect of the invention, the initial contact may be via an IM. In this embodiment, the RTC-CCS offers a combination of services such as ISR, IMH, and MCI.

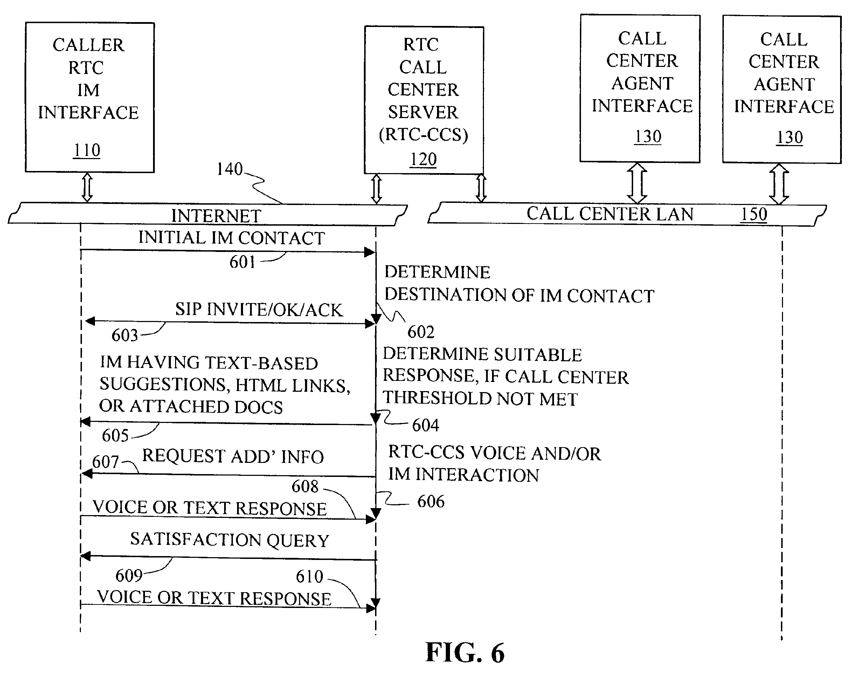

For example, FIG. 6 depicts the scenario where a consumer initially contacts the call center with an IM (step 601). RTC-CCS 120 uses the "From:" and "Contact:" fields in the instant message (step 602) header as an interrogative communication by which the RTC-CCS 120 determines how to issue the subsequent SIP INVITE message (step 603). If the consumer accepts the SIP INVITE and there is determined, in the step of deriving a communication routing step by RTC-CCS 120, to be no need for immediate human call center agent engagement(step 604), RTC-CCS 120 may offer addition information (step 605) and then as part of the RTC-CCS 120 voice and IM interactive process (step 606) speak to the caller, requesting via voice, or text, or both, additional information (step 607) about the intent of the caller, and listen to the caller (step 608), for example. Therefore, for this embodiment of the invention, RTC-CCS 120 may initiate the call center's session by responding to either a SIP INVITE or an instant message from the caller.

### Session-on-Hold

RTC-CCS 120 generalizes the delivery of music-on-hold (MOH) or audio-on-hold AOH information to the caller. Instead of delivering only music or audio, RTC-CCS is able to deliver instant messages, documents, web links within instant messages, video, and audio by exploiting the caller having an integrated client, e.g., RTC Messenger, that supports delivery of these information channels. This particular RTC-CCS service is referred to herein as Session-on-Hold (SOH).

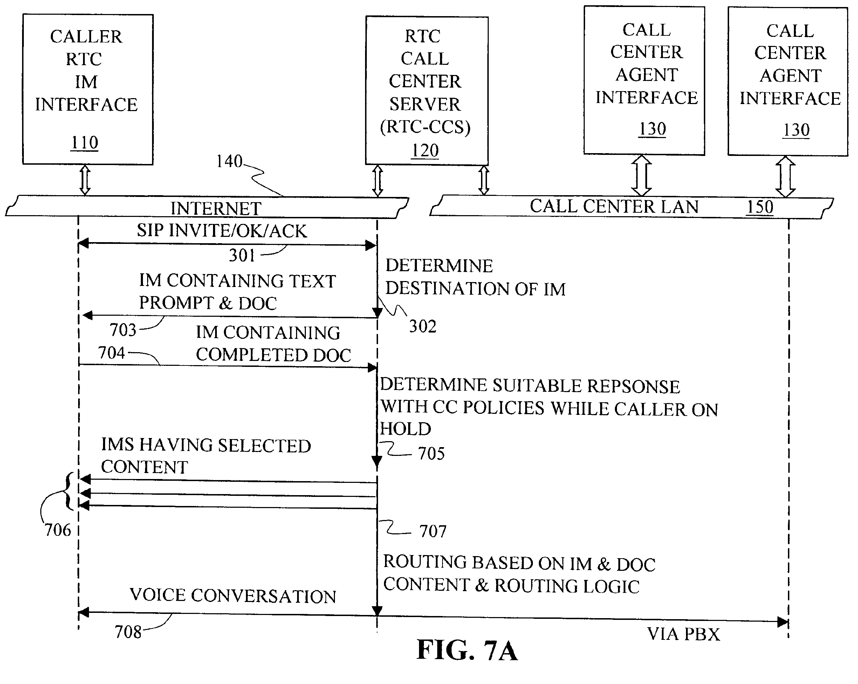

FIG. 7A depicts the manner in which RTC-CCS 120 delivers SOH functionality. SOH generalizes conventional MOH and call queuing. While the caller is waiting for an agent to become available, RTC-CCS 120 may send additional IMs having such content as text, HTML links, documents, audio clips, video clip and audio-video clips. This information may include of advertisements, special offers, personalized account status, related product information, expected waiting time information, and the like. In this example, when the caller contacts the call center (step 301), the RTC-CCS 120 determines the destination for the caller to receive an IM (step 302) and then sends, as an interrogative communication, an IM having a text prompt and a document to be completed by the caller (step 703). The caller then enters information describing the purpose of the call (step 704), and upon completion and submission of these entries, the RTC-CCS 120, as part of the step of determining a communication routing state, begins to execute the routing decision and routing (step 707) which is preferably based on the bodies of the caller IMs and caller-completed documents and the routing decision may also include existing call agent routing logic. In this example however, instead of immediately connecting the caller with the human agent, the RTC-CCS 120 analyzes caller IMs and uses call center policies to deliver appropriate session content, that is, the amount and kind of content information to communicate, while the caller waits for the agent to become available (step 705) and delivers multimedia information to the caller (step 706), Such multimedia information can include IMs containing text, HTML, attached documents, and video and audio clips as optional multimedia content. For example, in an airline reservation scenario , the RTC-CCS 120 delivers a short video clip depicting a weekend travel special, provides a web link within an IM for purchasing this special item, and/or sends the caller's current frequent flyer balance within an instant message. RTC-CCS exploits all of the available communication channels within the caller's RTC Messenger or similar client to provide the user with information. Finally, the call is routed to the best agent (step 707), and thereafter voice-based conversation ensues (step 708).

### Presence Messages

The present invention in its several embodiments provides for the combination of a graphical display updating the caller with call center status and expected wait time in the queue, operating in conjunction with a voice call to a call center. RTC Messenger, and similar software agents, supports the display of availability data using a non-audio based means referred to herein as presence. Presence information is sent to RTC Messaging using SIP NOTIFY messages containing a message body with presence data. With a built-in presence capability for the RTC Messengers, the availability of one or more buddies is displayed. Each buddy's on-line, out-to-lunch, or other status is presented via the RTC Messenger GUI.

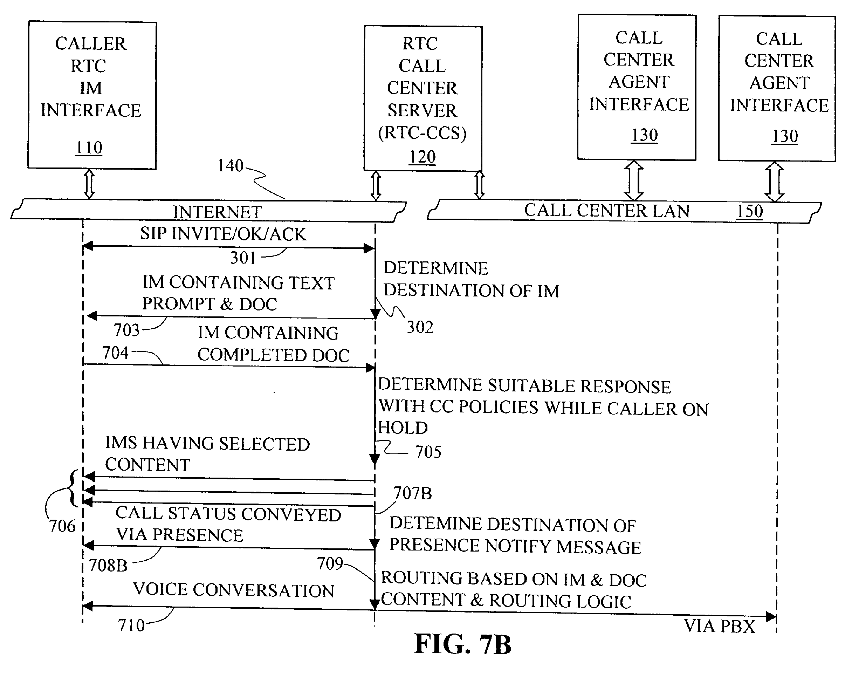

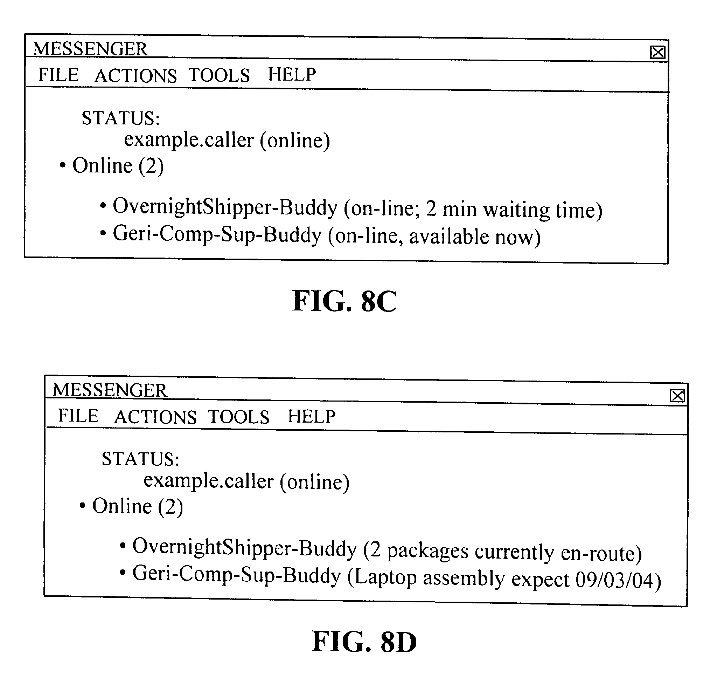

In an embodiment of the present invention, RTC-CCS 120 sends call center availability to RTC Messenger using presence messages. FIG. 7B shows a preferred sequence of events. The caller contacts RTC-CCS 120 (step 301), RTC-CCS determines the destination for an IM (step 302), and sends, as an interrogative communication, an IM preferably prompting an attached document be completed to refine the purpose of the call (step 703) or alternatively requesting in the text of the IM the caller's intent or purpose for this present call. The caller sends an IM describing the purpose of the call (step 704) that may include a completed document previously sent by the RTC-CCS 120. Based on the analysis of the intent of the caller (step 705), the RTC-CCS 120 sends (step 706) IMH documents, text chats and talks to the caller, participates in SOH exchanges. Eventually, the caller typically begins wait for an available call center agent. The RTC-CCS 120 uses, as part of the step of determining a communication routing state, the "Contact:" field in the header of the caller's SIP INVITE message to determine the destination of the presence NOTIFY message (step 707B). RTC-CCS 120 then sends presence information to the caller's client describing the expected waiting time (step 708B). Thereafter, the communication routing state is determined (step 709) where the routing may be based on IM content, as part of the step of determining a communication routing state, document content and routing logic. Because status information such as waiting-time-for-next-agent may also be sent via SIP/SIMPLE presence-based notification messages, the caller's RTC Messenger therefore no longer indicates simple presence state such as on-line, unavailable, and the like, but instead displays the expected waiting time, as shown, for example, in FIG. 8C, as described below.

In the example embodiment of the invention in FIG. 7B, RTC-CCS 120 informs the caller as to the availability of the call center and what RTC-CCS 120 believes will be the caller's expected waiting in the call center queue using presence messages wherein the caller is kept informed via the graphical RTC Messenger display. The built-in display capabilities of the caller's RTC Messenger make it possible to keep the user informed and updated via graphical means rather than with, or in addition to, audio means. In the graphical only updates mode, for example, the caller is free to go about his work, without listening to an audio interruption, occasionally glancing at the graphical display in order to know his current wait status within the call center queue. RTC-CCS 120 periodically sends status updates regarding the caller's standing, and impliedly his progress, within the queue. In one example embodiment, RTC-CCS 120 updates the caller's display every minute by sending an additional SIP NOTIFY presence messages wherein each SIP NOTIFY presence message includes an updated waiting time.

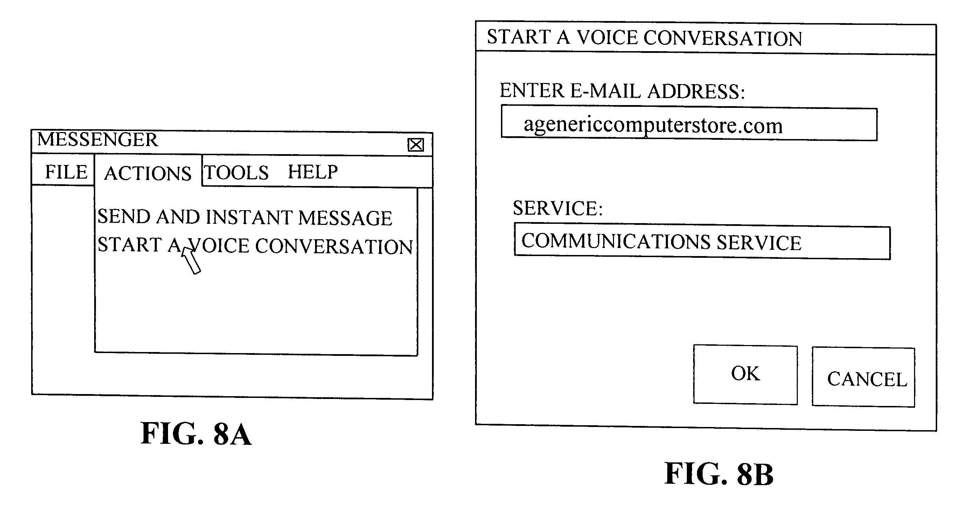

A caller may use the RTC Messenger to make the initial contact with a call center that has RTC-CCS 120 in one of several ways. Two exemplary methods for initial contact with a call center that has RTC-CCS 120 are depicted in FIGS. 8A-C. FIGS. 8A and 8B depict a manual process that a caller uses to contact a call center with RTC-CCS 120. In this example method, the caller uses his RTC Messenger to manually enter the fully qualified domain name of the call center. For example, if the caller wanted to make a voice call to "A Generic Computer Store" with RTC Messenger he would start a voice conversation by selecting from the ACTIONS pull-down menu in the Instant Message window and, with the Start a Voice Mail window open, the caller then enters "agenericcomputerstore.com" as shown in FIG. 8B. In this first method, the user might also contact the call center with an initial instant message to the call center's RTC-CCS 120, as described above. In this example, the caller uses the Start a Voice Conversation, or Send Instant Message menu selections for example, and then enters the fully-qualified domain name of the call center. In this example method, the call center has not been entered on the caller's buddy list.

A second method for contacting the call center is referred to as Call Center Buddies (CCB) and depicted in FIG. 8C. With this method, the caller initially adds the call center to his list of buddies. The CCB entry in this embodiment corresponds to an entire call center. In this example, RTC-CCS 120 accepts the caller's buddy request and appears with a presence state. The user then initiates a voice call or sends an instant message to his CCB, in a substantially similar fashion as he would do for a human buddy. The call center, having being added to the caller's buddy list, facilitates a more direct access. One or more call centers, such as those for a commercial computer retailer or for an overnight shipping service in this example, now occupy a portion of the caller's desktop, and may be called or contacted via IM with a single mouse click for example. In addition, the presence channel in some embodiments is used to indicate call center availability.

As described above, RTC-CCS may as on option send other presence status information to the subscribed clients. For example, information about the call center state is pushed to the user whether or not an initial, or otherwise provoking user call had been made to the call center. FIG. 8C depicts the RTC Messenger buddy list example with the updated presence information sent from two call centers having RTC-CCS. The presence information for My-OvernightShipper-Buddy site shows that although the call center is open for business, there is currently a two-minute waiting time for human agents. Similarly, the presence information for agenericcomputerstore.com computer support, Geri-Comp-Sup-Buddy, shows that the call center is open and currently has available call center agents. Although not presently involved in any call, the consumer receives updated presence information from both Overnight Shipper and A Generic Computer Store. This example illustrates the graphical interface by which the caller places a voice call, or sends an instant message, to his exemplary Call Center Buddies: "Overnight Shipper" and "A Generic Computer Store", and thereby receive IHM or SOH information as previously described.

### Call Center Information via Presence Messages

The choice of what type of presence information RTC-CCS sends at any particular time to any particular consumer is configured within the RTC-CCS. For example, presence messages from RTC-CCS may as an option be used to display the expected wait time if the caller has placed a voice call to RTC-CCS, while RTC-CCS may also, as an option, send sales information, order status and other important call center data through the presence communications channel even if the consumer has not initiated a call.

FIG. 8D depicts an example of how an RTC-CCS at Overnight Shipping and another RTC-CCS at A Generic Computer Store use presence messages to keep a consumer informed about the status of a package shipment and the status of a customized PC order. RTC-CCS uses the presence notification messages to send other important status information.In these examples, the consumer has not placed voice call to either Overnight Shipping or A Generic Computer Store but has simply added Overnight Shipping and A Generic Computer Store to his buddy list. RTC-CCS pushes relevant information to the user without requiring the initiation of a voice or an instant message call to the call center. Through this mechanism, the call center provides important useful customer service information before the customer initiates a call.

One of the advantages of adding a CCB to a buddy list is that the consumer receives personalized information from the RTC-CCS in the call center even if a call has not been initiated. This information might serve as the prompt for the consumer to subsequently initiate instant message or voice communication with the call center.

For example, a consumer has ordered a laptop PC and has already added "A Generic Computer Store" as a CCB. The consumer views this information, as shown in FIG. 8D and is wondering about shipping details of his laptop, and if it may still be possible to purchase more memory. The user then uses RTC Messenger to initiate contact with A Generic Computer Store using his CCB. In this particular example, the user prefers to initiate contact with A Generic Computer Store using instant messaging. The corresponding dialog between this user and A Generic Computer Store's RTC-CCS is recordable in a dialog box. The user first interacts with A Generic Computer Store's RTC-CCS with an instant message. The customer, now a caller, may ask several IM questions about his pending laptop order, before being escalated to a human call center agent who collects relevant information necessary for the caller's additional purchase. However, rather than directly routing this call to a human agent immediately, RTC-CCS initially seeks to use IMH to provide the necessary information about the method of shipment, memory requirements for the laptop. When RTC-CCS determines that it is now necessary for the user to speak with a call center agent, a voice INVITE is sent to the user's RTC Messenger and the call is then accurately routed to an agent who is skilled in laptop handling memory sales. RTC-CCS has facilitated the smooth escalation between order status of the laptop, shown as presence state on the user's desktop, through a caller's IMH session, via a voice call routed to the best call center agent.

### Agent Interfaces Enabled with SIP Client

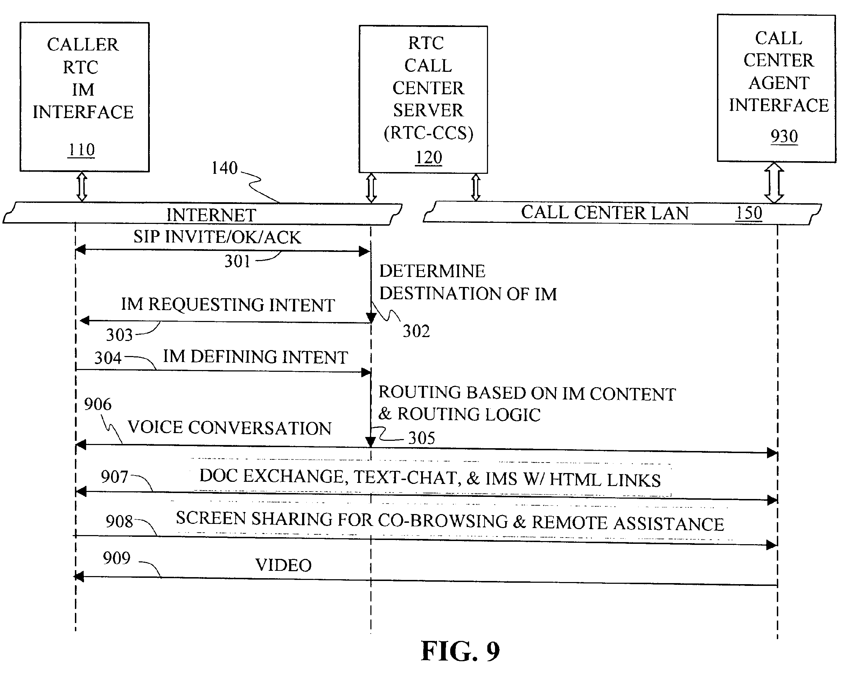

Preceding sections have described important services that RTC-CCS 120 provides to callers who have integrated clients However, when call center agents also have integrated clients 930, RTC-CCS, in these embodiments, provides additional features and benefits. FIG. 9 depicts the RTC-CCS call center architecture wherein both callers and agents have integrated clients with steps being similar to the steps previously described, whereby a caller enters into conversation with an agent. However, in the instant embodiment, the voice is now sent to the call center agent's integrated client as VoIP (step 906), instead of to the agent's PBX telephone set. FIG. 9 further illustrates that the one or more call center agents may also use an integrated client to increase the level of customer service and satisfaction. For example, the call center agent supplies customer-relevant HTML links via IMs, exchanges documents (step 907), and provides a remote support via screen sharing (step 908). The call center agent, as an option, may also transmit video (step 909) for an increased level of personalization. In the preferred embodiment, the RTC-CCS 120 is used as the proxy server for these exchanges.

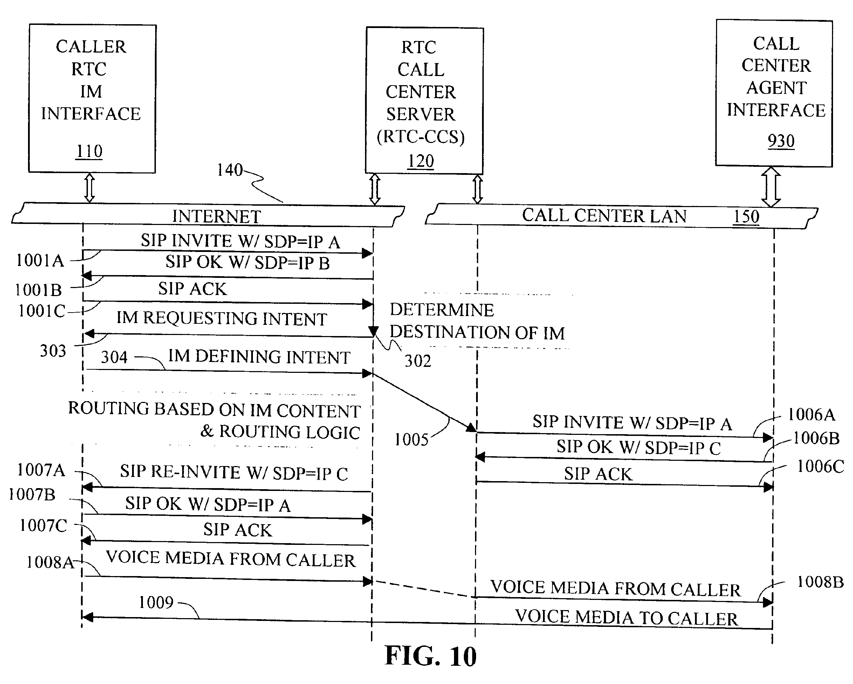

FIG. 10 describes further details of the manner in which the RTC-CCS 120 routes a VoIP SIP call. The caller sends an INVITE to RTC-CCS 120 (step 1001A), receives from the RTC-CCS 120 a SIP OK (step 1001B) and the caller next returns an acknowledgement (step 1001C) as a SIP ACK. The RTC-CCS 120, as part of an interrogative communication, sends an IM (step 303) requesting the intent of the caller and preferably receives an IM (step 304) having sufficient information from which the caller's intent may be discerned. In determining a communication routing state (step 1005), the RTC-CCS 120 determines the appropriate call center agent, and then issues a SIP:INVITE (step 1006A) preferably with Session Description Protocol (SDP) specifying the caller IP address as the media source. The call center agent answers the call with an "OK" (step 1006B) with its IP address C as the media source and receives acknowledgement (step 1006C). RTC-CCS 120 resends a SIP:INVITE to the caller (step 1007A) thereby informing the caller that its media should be sent to the call center agent's IP address C, and with an OK (step 1007B) and acknowledgement (step 1007c), the conversation then ensues with voice media from the caller first going to the RTC-CCS 120 (step 1008a) and then to call center agent (steps 1008B) and from the call center agent to the caller (step 1009). RTC-CCS 120, as an option, may also perform inbound media mapping so that unauthorized User Datagram Protocol (UDP) streams into the call center are blocked. RTC-CCS also provides firewall-based inbound media mapping for security. The session is also maintained within the RTC-CCS server, so that call center statistics may be derived. RTC-CCS computes typical call center statistics such as number of calls, average call duration, average wait time, and the like. RTC-CCS also computes statistics that measure the performance of the new services it provides. For example, statistics on the average number of IMH exchanges, the number of calls that transition from IMH to voice, average length of an instant message, number of callers requesting a CCB are computed. RTC-CCS in some embodiments also offers the recording services that record the entire contact history including the ISR and SOH exchanges as well as voice and video. RTC-CCS of some embodiments also offers next-generation call center supervision, whereby a human call center supervisor is able to monitor the caller-agent interactions such as text chatting or document exchange.

RTC-CCS facilitates parallel communication sessions between the caller and call center agent using standard RTC Messenger capabilities. For example, the call center agent may transfer a document, such as a help manual, product brochure or other file, directly to the caller. The caller and agent might also text chat in parallel with the voice conversation. For example, the agent as an option could request "Please click this hyperlink for more information," while sending an IM to the caller wherein the IM contains the link. The call center agent may optionally enable video, and other channels of communication enabled by RTC Messenger. These channels include screen sharing, remote assistance, web co-browsing, white boarding and the like.

While these services are presently used within peer-to-peer sessions between buddies on the Internet or corporate LAN, it is by following the techniques or steps of the present invention that these services become available between a caller and call center agent.

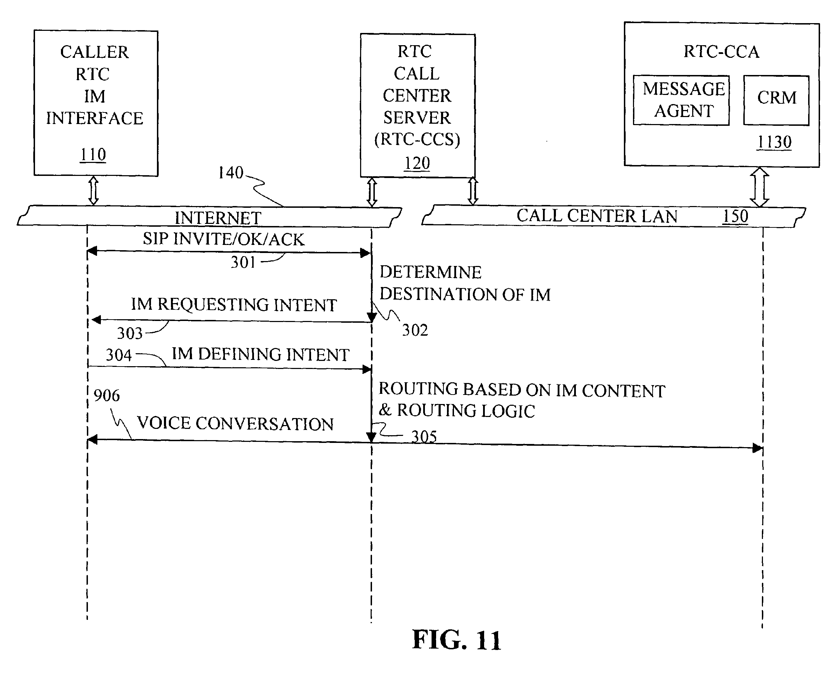

FIG. 11 illustrates that for the preferred embodiment of the present invention having the RTC-CCS 120 sending an interrogative communication (step 303) to the user or caller RTC IM Interface 110 and based on the information received, determining a communication routing state (step 305), CRM processing is preferably used to assist the call center agents 1130 in their interactions with the callers. CRM packages may also use CTI so that when the call center agent answers the call, customer information is retrieved from a database indexed by caller-id provided from the PSTN and the customer information would be retrieved from a database indexed by the "From:" field in the header within the SIP INVITE from the caller. That is, in the preferred embodiment, the call center agent uses a single software application that integrates RTC Messenger and CRM, rather than two separate non-integrated applications. To simplify the software development of such an integrated application, referred to as RTC Call Center Agent (RTC-CCA), the use of an RTC-CCS Desktop Toolkit that exposes functionality of both the message agent and RTC-CCS is depicted in FIG. 11.

The following method steps as well as the following server features, separately or in any combination, also constitute advantageous embodiments of the claimed and/or described invention:
- The claimed and/or described method wherein the step of determining the routing state further comprises applying routing logic to the determined best fit;
- The claimed and/or described method wherein the call center agent interface comprises a telephone;
- The claimed and/or described method wherein the call center agent interface comprises a telephone and processing of instant text messages over at least one network segment;
- The claimed and/or described method wherein the call center agent interface processes instant text messages and voice transmissions over at least one network segment;
- The claimed and/or described method wherein the first communication is a session request;
- The claimed and/or described method wherein the first communication is an instant text message;
- The claimed and/or described method wherein the interrogative communication is an instant text message requesting user purpose of the first communication;
- The claimed and/or described method wherein the interrogative communication is an instant text message requesting the user to complete and return an attached document;
- The claimed and/or described method wherein the interrogative communication is an instant text message having a web form link requesting the user to complete and return the linked web form;
- The claimed and/or described method wherein the interrogative communication is a session request;
- The claimed and/or described method wherein the transmitted interrogative communication is an instant text message having at least one text-based suggestion;
- The claimed and/or described method wherein the transmitted interrogative communication is an instant text message having at least one web link;
- The claimed and/or described method wherein the transmitted interrogative communication is an instant text message having at least one attached document;
- The claimed and/or described method wherein the transmitted interrogative communication is an instant text message having attached one or more multimedia files;
- The claimed and/or described server wherein the server is further adapted to provide a session-on-hold service to the user;
- The claimed and/or described server wherein the server is further adapted to provide an instant messaging help service to the user;
- The claimed and/or described server wherein the server is further adapted to allow a user, having a buddy list, to add the call center to the buddy list, and is further adapted to convey at least one informative communication.

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

Many alterations and modifications may be made by those having ordinary skill in the art without departing from the spirit and scope of the invention and its several embodiments disclosed herein. Therefore, it must be understood that the illustrated embodiments have been set forth only for the purposes of example and that it should not be taken as limiting the invention as defined by the following claims.

## Claims

1. A method of resource provisioning between a call center and a user, the user having a user interface adapted to process communications including text messages and voice transmissions over a network segment, the method comprising:
receiving by the call center a first communication transmitted via the user interface, wherein the call center comprises:
a real-time communication call center server adapted to process a plurality of user instant text messages and adapted to process a plurality of user voice transmissions; and
determining by the real-time communication call center server, a user destination address from the first communication;
transmitting, by the real-time communication call center server to the determined user address, an interrogative communication;
receiving by the real-time communication call center server a user reply to the interrogative communication; and
determining a communication routing state for the user based on the reply to the interrogative communication.

2. The method as claimed in claim 1 wherein the call center further comprises one or more call center agents.

3. The method as claimed in claim 2 wherein the step of determining the communication routing state comprises:
interrogating the content of the first communication and the reply to the interrogative communication; and
determining, based on the reply, a best fit for the content of the first communication and the reply to the interrogative communication with the one or more call center agents.

4. The method as claimed in claim 2 further comprising the step of routing, according to the routing state, the user to a call center agent of the one or more call center agents having a call center agent interface.

5. The method as claimed in claim 1 further comprising the steps of:
Determining, by the real-time communication call center server, an amount and kind of content to include in the at least one communication to be transmitted to the user; and
transmitting to the user the at least one communication having the determined amount and kind of content.

6. A system for resource provisioning between a call center and at least one user, each user having a user interface adapted to process communications including instant text messages and voice transmissions over a network segment, the call center further comprising:
a real-time communication center server adapted to process user communications including a plurality of user instant text messages and a plurality of user voice transmissions; and
wherein the real-time communication center server is adapted to automatically:
determine a user destination address for each received initial user communication;
transmit to each determined user address an interrogative communication; and
if a reply communication to the interrogative communication is received from the at least one user: determine, based on the reply:
an amount and kind of content of a communication to be sent to the user, and
transmit to the user the communication having the determined amount and kind of content.

7. The system as claimed in claimed 6 wherein the communication center further comprises one or more call center agents.

8. The system as claimed in claimed 7 wherein the communication center determines a resource agent routing state.

9. The system as claimed in claimed 8 wherein the communication center routes the user to a call center agent according to the routing state.

10. A server adapted to provision resources of a call center to at least one user having an address, the server comprising:
a communication module adapted to automatically:
transmit to the user address at least one interrogative communication; and
transmit, to the user, at least one communication determined from one or more user replies to the interrogative communication; and
a routing module adapted to automatically route the user to a resource of the resource center based on one or more user replies to the at least one interrogative communication.
